# EUROPÄISCHE PATENTSCHRIFT

(11) **EP 1 961 533 B1**
(45) Veröffentlichungstag und Bekanntmachung des Hinweises auf die Patenterteilung: **26.08.2009**
(21) Anmeldenummer: 07003880.7
(22) Anmeldetag: 26.02.2007
(51) Int. Cl.: B27D 5/00, B29C 63/00

(54) **Verfahren zum Anhaften von Kantenmaterial an Leichtbauplatten**
Method for sticking edging material to lightweight building boards
Procédé de collage de matériaux de rebord sur des panneaux de construction légers

(43) Veröffentlichungstag der Anmeldung: 27.08.2008
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE); Schmid, Johannes, 72181 Starzach/Wachendorf (DE)
(74) Vertreter: HOFFMANN EITLE

(56) Entgegenhaltungen:
- EP-A- 1 640 128
- DE-A1- 19 960 304

## Beschreibung

### Stand der Technik

Die Erfindung betrifft ein Verfahren zum Anhaften von Kantenmaterial an Leichtbauplatten, die zwei dünnwandige Decklagen und eine zwischen den Decklagen angeordnete Kernlage aus leichtem Füllmaterial aufweisen, nach dem Oberbegriff von Anspruch 1.

### Technisches Gebiet

Leichtbauplatte der hier zur Rede stehenden Art finden verbreitet Anwendung, beispielsweise zur Herstellung von Türen, zunehmend aber auch zur Herstellung von Tischplatten oder anderen Möbelteilen.

Ein Verfahren der eingangs genannten Art ist beispielsweise in der EP-A-1640128 offenbart. Bei diesem Verfahren wird zunächst eine Leichtbauplatte formatiert (in die gewünschte Rohform gebracht). Anschließend wird im Bereich der Schmalseite der Leichtbauplatte eine Ausnehmung eingefräst, und zwar sowohl in die Decklagen als auch in die Kernlage. Abschließend wird eine Stützkante in die Ausnehmung eingeleimt, die mit einer Dekorkante versehen ist oder noch versehen wird. Obgleich sich das Verfahren in der Praxis bewährt hat, ist es vergleichsweise aufwändig. Ferner erfordert das Verfahren eine genaue Abstimmung der Abmessungen der Ausnehmung auf die Abmessungen der Stützkante und Maßnahmen zur Sicherstellung einer gleichmäßigen Verleimung zwischen Stützkante und Decklagen.

Ferner offenbart die DE 199 60 304 A1 eine Leichtbauplatte mit einer in einer entsprechenden Aussparung vorgesehenen Kante.

### Darstellung der Erfindung

Es ist daher Aufgabe der Erfindung, ein gattungsgemäßes Verfahren bereitzustellen, das einen vereinfachten Verfahrensablauf ermöglicht.

Diese Aufgabe wird erfindungsgemäß durch ein Verfahren nach Anspruch 1 gelöst. Besonders bevorzugte Weiterbildungen der Erfindung sind in den abhängigen Ansprüchen angegeben.

Der Erfindung liegt der Gedanke zugrunde, dass das Füllmaterial der Leichbauplatte vorteilhaft als Einbettung und nachgiebige Lagerung der Stützkante genutzt werden kann. Vor diesem Hintergrund ist erfindungsgemäß vorgesehen, dass bei einem gattungsgemäßen Verfahren die Stützkante im Bereich der Schmalfläche der Leichtbauplatte in einen Abschnitt zwischen zwei Decklagen eingebracht wird, ohne dass zuvor eine der Stützkante im wesentlichen entsprechende Aussparung mindestens einer Decklage und/oder der Kernlage in diesem Abschnitt erzeugt wurde. Auf diese Weise kann das im Stand der Technik erforderliche Ausfräsen einer Aussparung in Kernlage und Decklagen entfallen, was den Verfahrensablauf und auch die Konstruktion einer hierfür eingesetzten Maschine drastisch vereinfacht. Auch ergibt sich hieraus ein beschleunigter Verfahrensablauf.

Darüber hinaus wird die Stützkante nachgiebig in die Kernlage eingebettet, woraus sich eine ausreichende Gegenkraft ergibt, um die Dekorkante mit der Stützkante zu verleimen. Durch diese Verleimung (oder sonstige Haftverbindung) zwischen Dekorkante und Stützkante wird der Leichtbauplatte auch eine Stabilität im Bereich der Schmalseite verliehen, die für die meisten Anwendungsfälle ausreichend ist. Vor diesem Hintergrund ist gemäß der Erfindung vorgesehen, dass die Kernlage beim Einbringen der Stützkante zumindest abschnittsweise verformt wird, und zwar bevorzugt um einen Verformungsbetrag entsprechend der Dicke der Stützkante.

Obgleich die Stützkante und die Dekorkante im Rahmen der vorliegenden Erfindung auch als einstückiges Streifenmaterial (d. h. als integrierte Stütz- und Dekorkante) bereitgestellt werden können, hat es sich gemäß einer Weiterbildung der Erfindung als vorteilhaft erwiesen, dass Stützkante und Dekorkante separat bereitgestellt werden. Hierdurch muss bei wechselnden Dekorkanten (Dekoren) insgesamt deutliche weniger Kantenmaterial vorgehalten werden, da für alle Dekore dieselbe Stützkante verwendet werden kann und somit nur ein Stützkantenvorrat erforderlich ist.

Gemäß einer Weiterbildung der Erfindung ist vorgesehen, dass bei separater Bereitstellung von Stützkante und Dekorkante diese unmittelbar vor und/oder während des Einbringens der Stützkante in den Abschnitt zwischen zwei Decklagen miteinander verbunden, insbesondere verleimt werden. Auf diese Weise ergibt sich ein besonders kontinuierlicher Verfahrensablauf, und die beim Einbringen der Stützkante entstehende, elastische Rückstellkraft der Kernlage kann als Gegendruckkraft beim Verbinden der Stützkante und der Dekorkante verwendet werden, sodass keine separaten Gegendruckelemente oder dergleichen erforderlich sind. Ferner können Stütz- und Dekorkante in einem Arbeitsgang (beispielsweise in einem Umlauf um das Werkstück herum) angebracht werden, sodass sich die Anzahl der Verfahrensschritte vermindert.

Alternativ ist gemäß einer Weiterbildung der Erfindung vorgesehen, dass die Dekorkante erst nach dem Einbringen der Stützkante in den Abschnitt zwischen zwei Decklagen mit der Stützkante verbunden, insbesondere verleimt wird. Hierdurch lässt sich die Stützkante besonders präzise in dem Abschnitt zwischen zwei Decklagen positionieren und es muss erst zu einem sehr späten Zeitpunkt die jeweils gewünschte Dekorkante ausgewählt werden, was insbesondere bei Kleinserien- bzw. Einzelstückfertigung von Vorteil ist.

Um ein effizientes und dauerhaftes Verbinden von Stützkante und Dekorkante sowie ein sicheres Anbringen derselben an der Leichtbauplatte zu erzielen, ist es gemäß einer Weiterbildung der Erfindung vorgesehen, dass die Dekorkante, auf der der Schmalfläche zugewandten Seite haftend gemacht wird, insbesondere mit Haftmittel versehen oder ein vorhandenes Haftmittel aktiviert wird, und dass die Dekorkante mit der haftenden Seite an die Stützkante und die Decklagen angedrückt wird.

Dabei können im Rahmen der vorliegenden Erfindung unterschiedlichste Haftmittel zum Einsatz kommen und auch verschiedene Haftmittel miteinander kombiniert werden. So hat es sich im Hinblick auf eine gute Abdichtung und Dauerhaftigkeit der hergestellten Leichtbauplatte als vorteilhaft erwiesen, dass gemäß einer Weiterbildung die haftende Seite der Dekorkante mit mindestens zwei Bereiche mit unterschiedlichen Haftmitteleigenschaften aufweist, wobei bevorzugt die den Decklagen zugeordneten Bereich der haftenden Seite ein Haftmittel aufweisen, das bessere Feuchtigkeitsabdichtende Eigenschaften besitzt als das Haftmittel in mindestens einem anderen Bereich. Beispielsweise kann somit im Bereich der Decklagen ein hochwertiger, feuchtigkeitsabdichtender Kleber eingesetzt werden, während in anderen Bereichen ein kostengünstiger Kleber verwendet werden kann, der lediglich für eine gute Haftverbindung sorgen muss.

Die Stützkante kann prinzipiell derart bemessen sein, dass sie den Abschnitt (lichten Abstand) zwischen zwei Decklagen genau ausfüllt. Gemäß einer Weiterbildung der Erfindung ist jedoch vorgesehen, dass die Stützkante derart in den Abschnitt zwischen zwei Decklagen eingebracht wird, dass sie von mindestens einer Decklage beabstandet ist. Hierdurch ergibt sich ein einfaches und störungsfreies Verfahren, das nicht durch mögliche Maßtoleranzen, insbesondere der Decklagen, beeinträchtigt wird. Allerdings kann es im Hinblick auf eine ausreichende Stabilität und Steifigkeit der Leichtbauplatte vorteilhaft sein, wenn gemäß einer Weiterbildung der Erfindung die der Stützkante zugewandte Fläche mindestens einer Decklage zumindest abschnittsweise mit Haftmittel versehen wird, bzw. dass alternativ oder zusätzlich mindestens eine einer Decklage zugewandte Fläche der Stützkante zumindest abschnittsweise mit Haftmittel versehen wird.

Die Stützkante kann im Rahmen der vorliegenden Erfindung prinzipiell aus einem beliebigen Material bestehen, beispielsweise aus Holz, Kunststoff oder verschiedenen Verbundwerkstoffen. Gemäß einer Weiterbildung der Erfindung hat es sich jedoch als besonders vorteilhaft erwiesen, dass die Stützkante ein Fasermaterial, insbesondere ein Kartonmaterial aufweist.

Dieses Material stellt für die hier vorgesehene Anwendung einen optimalen Kompromiss aus ausreichender Festigkeit und Steifigkeit, kostengünstiger Verfügbarkeit und leichter Verarbeitbarkeit dar. Dabei ist zu beachten, dass die Verwendung eines Fasermaterials insbesondere eines Kartonmaterials, als Stützkante eine eigenständige Zielrichtung im Rahmen der vorliegenden Erfindung darstellt und zwar in Kombination mit dem Oberbegriff von Anspruch 1, nicht jedoch notwendigerweise mit dem kennzeichnenden Teil von Anspruch 1.

### Kurze Beschreibung der Zeichnungen

- Fig. 1: zeigt schematisch verschiedene Bearbeitungszustände einer Leichtbauplatte bei Durchführung einer ersten Ausführungsform des erfindungsgemäßen Verfahrens;
- Fig. 2: zeigt schematisch verschiedene Bearbeitungszustände einer Leichtbauplatte bei Durchführung einer zweiten Ausführungsform des erfindungsgemäßen Verfahrens.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

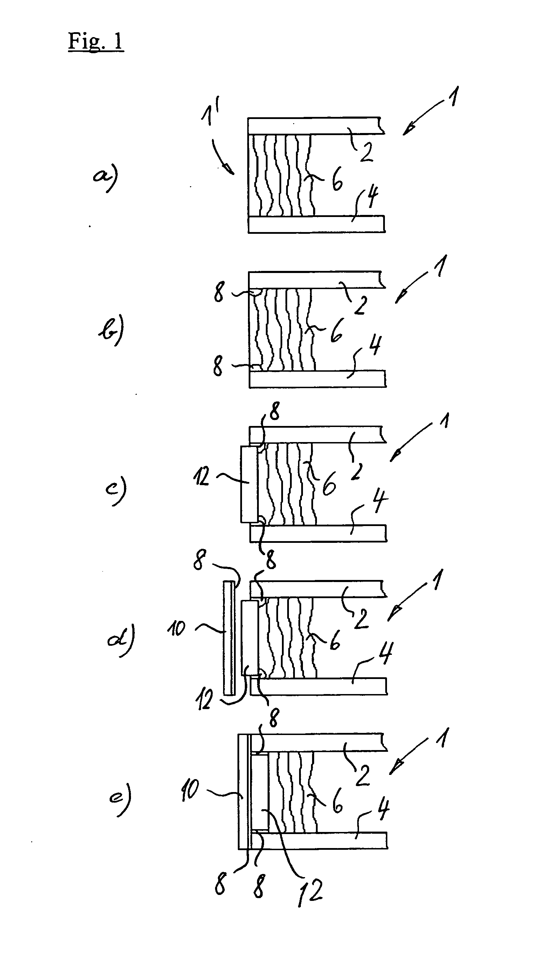

Zunächst wird eine erste Ausführungsform des erfindungsgemäßen Verfahrens unter Bezugnahme auf Fig. 1 beschrieben, die verschiedene Bearbeitungsphasen einer Leichtbauplatte 1 zeigt. Die Leichtbauplatte 1 besitzt in der vorliegenden Ausführungsform eine obere Decklage 2, eine untere Decklage 4 und eine dazwischen angeordnete Kernalge 6 aus leichtem Füllmaterial. Obgleich die vorliegende Erfindung nicht auf bestimmte Materialien beschränkt ist, können die dünnwandigen Decklagen 2, 4 beispielsweise durch eine Spanplatte gebildet sein, während die Kernlage 6 aus leichtem Füllmaterial beispielsweise einen Schaum, ein Papierwabenmaterial oder dergleichen aufweisen kann. Dabei besitzt die Kernlage 6 aus leichtem Füllmaterial in aller Regel eine geringere Dichte (ein geringeres Gewicht pro Volumeneinheit) als die jeweiligen Decklagen 2 und 4.

In Schritt a) des Verfahrens wird zunächst eine Leichtbauplatte 1 mit einem gewünschten Format (gewünschten Abmessungen) bereitgestellt, beispielsweise indem die Leichtbauplatte 1 aus einer großformatigen Leichtbauplatte herausgetrennt wird.

Anschließend wird in Schritt b) beispielsweise mittels einer Leimraupe ein Haftmittel 8, insbesondere Leim, auf die Innenflächen der Decklagen 2, 4 im Bereich der Schmalseite der Leichtbauplatte 1 aufgetragen.

Nun wird eine Stützkante 12 zugeführt (Schritt c)), die in der vorliegenden Ausführungsform aus einem Kartonstreifen besteht, obgleich selbstverständlich auch andere Materialien zum Einsatz kommen können. Die Stützkante 12 wird in den Abschnitt zwischen den beiden Decklagen 2, 4 im Bereich der Schmalfläche 1' der Leichtbauplatte 1 eingebracht, und zwar ohne dass zuvor eine der Stützkante im Wesentlichen entsprechende Aussparung der Decklagen 2, 4 oder der Kernlage 6 erzeugt wurde. Bei diesem Vorgang wird daher die Kernlage 6 verformt, und zwar um einen Verformungsbetrag entsprechend der Dicke der Stützkante 12. Gleichzeitig kommen hierbei die Stirnseiten der Stützkante 12 mit dem zuvor aufgetragenen Haftmittel 8 in Berührung, sodass der zwischen der Stützkante 12 und den Decklagen 2, 4 vorhandene Spalt zumindest abschnittsweise mit dem Haftmittel gefüllt wird.

Simultan zu dem Einbringen der Stützkante 12 in den Abschnitt zwischen den Decklagen 2, 4 wird eine Dekorkante 10 zugeführt, die auf ihrer der Stützkante 12 zugewandten Seite vorab mit einem Haftmittel versehen ist oder während des Zuführens mit einem Haftmittel versehen wird (Schritt d)). Anschließend wird die Dekorkante 10 an die Stützkante 12 angelegt, und zwar in der vorliegenden Ausführungsform bevor die Stützkante vollständig in den Abschnitt zwischen den Decklagen 2, 4 eingebracht ist. Dabei wird die Dekorkante 10 beispielsweise mit einer Andruckrolle (nicht gezeigt) in Richtung der Schmalfläche 1' der Leichtbauplatte 1 angedrückt, sodass in Zusammenwirken mit einer elastischen Rückstellkraft der leichten Kernlage 6 eine Haftverbindung zwischen der Dekorkante 10 und der Stützkante 12 herbeigeführt wird.

Ferner wird die Dekorkante 10 auch an die Stirnseiten der Decklagen 2, 4 angedrückt, um auch dort eine Haftverbindung zu erzielen, bis schließlich der in Schritt e) in Fig. 1 gezeigte Zustand erreicht ist. Hiermit ist das Anhaften des Kantenmaterials 10, 12 an die Leichtbauplatte 1 erfolgreich abgeschlossen.

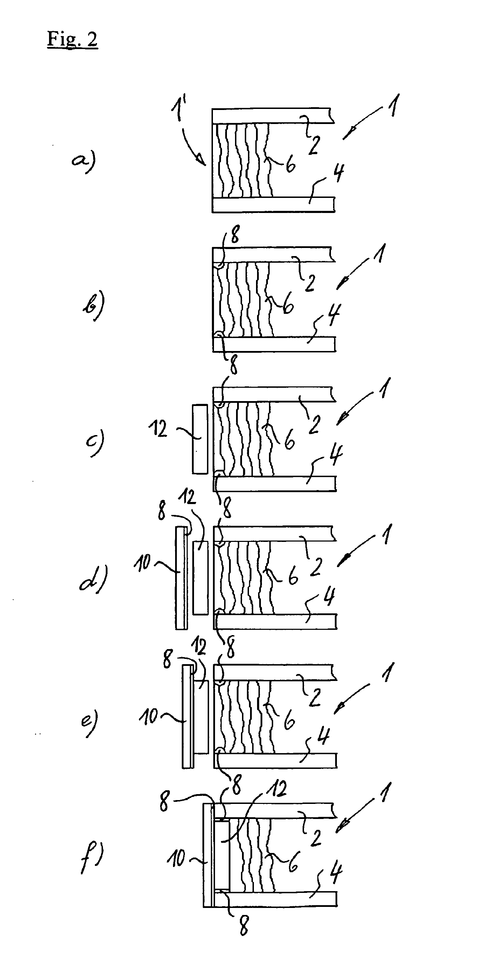

Eine zweite bevorzugte Ausführungsform des erfindungsgemäßen Verfahrens ist schematisch in Fig. 2 dargestellt. Dabei entsprechen die in Fig. 2 gezeigten Schritte a) und b) denjenigen aus Fig. 1.

Die in Fig. 2 gezeigte Ausführungsform unterscheidet sich von der in Fig. 2 gezeigten Ausführungsform jedoch wesentlich dadurch, dass die Stützkante 12 und die Dekorkante 10 bereits vor dem Einbringen der Stützkante 12 in den Abschnitt zwischen den Decklagen 2, 4 miteinander haftend verbunden werden, (Schritt e)), beispielsweise unter Einsatz hier nicht gezeigter Andruck- und Führungsrollen. Erst anschließend wird die Einheit aus Stützkante 12 und Dekorkante 10 derart an die Schmalfläche 1' der Leichtbauplatte 1 angelegt, dass die Stützkante 12 in den Abschnitt zwischen den Decklagen 2, 4 eingebracht und die Dekorkante 10 an die Stirnseiten der Decklagen 2, 4 angelegt wird. Das Einbringen der Stützkante 12 erfolgt dabei, wie in der obigen ersten Ausführungsform, ohne dass zuvor eine der Stützkante im Wesentlichen entsprechende Aussparung der Decklagen 2, 4 oder der Kernlage 6 in diesem Abschnitt erzeugt wurde. Dementsprechend ergibt sich auch bei diesem Verfahrensschritt eine Verformung der Kernlage 6 entsprechend der Dicke der Stützkante 12.

Im Rahmen der vorliegenden Erfindung sind selbstverständlich auch weitere Ausführungsformen möglich. Beispielsweise kann die Stützkante 12 auch vollständig in den Abschnitt zwischen den Decklagen 2, 4 eingebracht werden (d.h. bis sie mit der Stirnseite 1' der Leichtbauplatte 1 bündig ist), um erst anschließend die Dekorkante 10 haftend an die Stützkante 12 und die Stirnseiten der Decklagen 2, 4 anzulegen.

Darüber hinaus ist zu beachten, dass das erfindungsgemäße Verfahren auf unterschiedlichen Maschinentypen ausgeführt werden kann, beispielsweise auf einer Durchlaufmaschine (im Durchlauf) oder auf einer Stationärmaschine, bei welcher das Werkstück während des Verfahrensablaufs stationär angeordnet ist. Auch Mischformen beider Maschinenarten sind selbstverständlich im Rahmen der vorliegenden Erfindung möglich. Ferner kann das Anbringen von Stützkante und Dekorkante im Rahmen der vorliegenden Erfindung mit unterschiedlichsten Vorrichtungen erfolgen, beispielsweise mittels eines einzigen Aggregats, oder auch mittels unterschiedlicher Aggregate.

## Patentansprüche

1. Verfahren zum Anhaften von Kantenmaterial (10, 12) an Leichtbauplatten (1), die zwei dünnwandige Decklagen (2, 4) und eine zwischen den Decklagen angeordnete Kernlage (6) aus leichtem Füllmaterial aufweisen, mit den Schritten:
Bereitstellen einer Leichtbauplatte (1), einer Dekorkante (10) und einer Stützkante(12), und
Anhaften der Dekorkante (10) und/oder der Stützkante (12) im Bereich einer Schmalfläche (1') der Leichtbauplatte (1),
**dadurch gekennzeichnet, dass**
die Stützkante (12) im Bereich der Schmalfläche (1') der Leichtbauplatte (1) in einen Abschnitt zwischen zwei Decklagen (2, 4) eingebracht wird, ohne dass zuvor eine der Stützkante im wesentlichen entsprechende Aussparung mindestens einer Decklage und/oder der Kernlage in diesem Abschnitt erzeugt wurde, die Kernlage (6) beim Einbringen der Stützkante (12) zumindest abschnittsweise verformt wird.

2. Verfahren nach Anspruch 1, **dadurch gekennzeichnet, dass** die Kernlage (6) beim Einbringen der Stützkante (12) um einen Verformungsbetrag entsprechend der Dicke der Stützkante (12) verformt wird.

3. Verfahren nach Anspruch 1 oder 2, **dadurch gekennzeichnet, dass** Stützkante (12) und Dekorkante (10) separat bereitgestellt werden, und dass diese bevorzugt unmittelbar vor und/oder während des Einbringens der Stützkante (12) in den Abschnitt zwischen zwei Decklagen (2, 4) miteinander verbunden, insbesondere verleimt werden.

4. Verfahren nach Anspruch 1 oder 2, **dadurch gekennzeichnet, dass** Stützkante (12) und Dekorkante (10) separat bereitgestellt werden, und dass die Dekorkante (10) bevorzugt nach dem Einbringen der Stützkante (12) in den Abschnitt zwischen zwei Decklagen (2, 4) mit der Stützkante (12) verbunden, insbesondere verleimt wird.

5. Verfahren nach einem der vorhergehenden Ansprüche, **dadurch gekennzeichnet, dass** die Dekorkante (10) auf der der Schmalfläche (1') zugewandten Seite haftend gemacht wird, insbesondere mit Haftmittel (8) versehen oder ein vorhandenes Haftmittel (8) aktiviert wird, und dass die Dekorkante (10) mit der haftenden Seite an die Stützkante (12) und die Decklagen (2, 4) angedrückt wird.

6. Verfahren nach Anspruch 5, **dadurch gekennzeichnet, dass** die haftende Seite der Dekorkante (10) mindestens zwei Bereiche mit unterschiedlichen Haftmitteleigenschaften aufweist, wobei bevorzugt die den Decklagen (2, 4) zugeordneten Bereiche der haftenden Seite ein Haftmittel aufweisen, das bessere feuchtigkeitsabdichtende Eigenschaften besitzt als das Haftmittel in mindestens einem anderen Bereich.

7. Verfahren nach einem der vorhergehenden Ansprüche, **dadurch gekennzeichnet, dass** die Stützkante (12) derart in den Abschnitt zwischen zwei Decklagen (2, 4) eingebracht wird, dass sie von mindestens einer Decklage (2, 4) beabstandet ist.

8. Verfahren nach einem der vorhergehenden Ansprüche, **dadurch gekennzeichnet, dass** die der Stützkante (12) zugewandte Fläche mindestens einer Decklage (2, 4) zumindest abschnittsweise mit Haftmittel (8) versehen wird.

9. Verfahren nach einem der vorhergehenden Ansprüche, **dadurch gekennzeichnet, dass** mindestens eine Fläche der Stützkante (12), die einer Decklage (2, 4) zugewandt ist, zumindest abschnittsweise mit Haftmittel (8) versehen wird.

10. Verfahren nach einem der vorhergehenden Ansprüche, **dadurch gekennzeichnet, dass** die Stützkante (12) ein Fasermaterial, insbesondere ein Kartonmaterial, aufweist.

## Claims

1. Process for sticking edging material (10, 12) onto lightweight building boards (1) comprising two thin-walled outer layers (2, 4) and a core layer (6) of lightweight filler material disposed between the outer layers, having the steps:
Provision of a lightweight building board (1), a decor edge (10) and a stabilising edge (12), and
Sticking on of the decor edge (10) and/or the stabilising edge (12) in the region of a narrow surface (1') of the lightweight building board (1),
**characterised in that**
the stabilising edge (12) is introduced into a section between two outer layers (2, 4) in the region of the narrow surface (1') of lightweight building board (1) without having first created a recess of at least one outer layer and/or of the core layer in this section, said recess corresponding substantially to the stabilising edge, the core layer (6) is deformed at least in sections when the stabilising edge (12) is introduced.

2. Process according to claim 1, **characterised in that** the core layer (6) is deformed when the stabilising edge (12) is introduced by an amount of deformation corresponding to the thickness of the stabilising edge (12).

3. Process according to claim 1 or 2, **characterised in that** the stabilising edge (12) and decor edge (10) are provided separately, and that these are preferably joined together, in particular glued together, immediately prior to and/or during introduction of the stabilising edge (12) into the section between two outer layers (2, 4).

4. Process according to claim 1 or 2, **characterised in that** the stabilising edge (12) and decor edge (10) are provided separately, and that the decor edge (10) is joined, particularly glued, to the stabilising edge (12) preferably after introduction of the stabilising edge (12) into the section between two outer layers (2, 4).

5. Process according to one of the preceding claims, **characterised in that** the decor edge (10) is made adhesive on the side facing towards the narrow surface (1'), in particular it is provided with a bonding agent (8) or an existing bonding agent (8) is activated, and that the decor edge (10) is pressed with the adhesive side onto the stabilising edge (12) and the outer layers (2, 4).

6. Process according to claim 5, **characterised in that** the adhesive side of the decor edge (10) comprises at least two regions with different bonding agent properties whereby preferably the regions of the adhesive side assigned to the outer layers (2, 4) comprise a bonding agent which has better moisture-sealing properties than the bonding agent in at least one other region.

7. Process according to one of the preceding claims, **characterised in that** the stabilising edge (12) is introduced into the section between two outer layers (2, 4) such that it is at a distance from at least one outer layer (2, 4).

8. Process according to one of the preceding claims, **characterised in that** the surface of at least one outer layer (2, 4) facing the stabilising edge (12) is provided at least in sections with bonding agent (8).

9. Process according to one of the preceding claims, **characterised in that** at least one surface of the stabilising edge (12) which faces towards an outer layer (2, 4) is provided at least in sections with bonding agent (8).

10. Process according to one of the preceding claims, **characterised in that** the stabilising edge (12) comprises a fibre material, particularly a paperboard material.

## Revendications

1. Procédé de collage de matériau de rebord (10, 12) sur des panneaux de construction légers (1), présentant deux couches de couvertures (2, 4) à paroi mince et une couche de noyau (6), disposée entre les couches de couverture et formée de matériau de remplissage léger, présentant les étapes suivantes :
fourniture d'un panneau de construction léger (1), d'un rebord de décoration (10) et d'un rebord d'appui (12), et
collage du rebord de décoration (10) et/ou du rebord d'appui (12) dans la zone d'une face étroite (1') du panneau de construction léger (1),
**caractérisé en ce que**
le rebord d'appui (12), dans la zone de la face étroite (1') du panneau de construction léger (1), est introduit dans un tronçon entre deux couches de couverture (2, 4), sans que, précédemment, un évidemment, correspondant sensiblement au rebord d'appui, au moins d'une couche de couverture et/ou de la couche de noyau, ait été produit dans ce tronçon, la couche de noyau (6) étant déformée, au moins par tronçons, lors de l'introduction du rebord d'appui (12).

2. Procédé selon la revendication 1, **caractérisé en ce que** la couche de noyau (6) est déformée, d'une valeur de déformation correspondant à l'épaisseur du rebord d'appui (12), lors de l'introduction du rebord d'appui (12).

3. Procédé selon la revendication 1 ou 2, **caractérisé en ce que** le rebord d'appui (12) et le rebord de décoration (10) sont fournis séparément, et **en ce que** ceux-ci sont reliés ensemble, en particulier collés, de préférence directement avant et/ou pendant l'introduction du rebord d'appui (12) dans le tronçon situé entre deux couches de couverture (2, 4).

4. Procédé selon la revendication 1 ou 2, **caractérisé en ce que** le rebord d'appui (12) et le rebord de décoration (10) sont fournis séparément, et **en ce que** le rebord d'appui (12) est relié ensemble, en particulier collé, au rebord d'appui (12), de préférence après l'introduction du rebord d'appui (12) dans le tronçon situé entre deux couches de couverture (2, 4).

5. Procédé selon l'une des revendications précédentes, **caractérisé en ce que** le rebord de décoration (10) est rendu adhérent, sur la face tournée vers la face étroite (1'), en particulier est muni d'adhésif (8) ou un adhésif (8) existant est activé, et **en ce que** le rebord de décoration (10) est pressé, par la face adhésive, sur le rebord d'appui (12) et les couches de couverture (2, 4).

6. Procédé selon la revendication 5, **caractérisé en ce que** la face adhésive du rebord de décoration (10) présente au moins deux zones ayant des propriétés d'adhésif différentes, où de préférence les zones, associées aux couches de couverture (2, 4), de la face adhésive présentent un adhésif ayant de meilleures propriétés d'isolation de l'humidité que l'adhésif, dans au moins une autre zone.

7. Procédé selon l'une des revendications précédentes, **caractérisé en ce que** le rebord d'appui (12) est introduit dans le tronçon entre deux couches de couvertures (2, 4), de manière qu'il se trouve espacé d'au moins une couche de couverture (2, 4).

8. Procédé selon l'une des revendications précédentes, **caractérisé en ce que** la face, tournée vers le rebord d'appui (12), d'au moins une couche de couverture (2, 4) est munie, au moins par tronçons, d'adhésif (8).

9. Procédé selon l'une des revendications précédentes, **caractérisé en ce qu'**au moins une face du rebord d'appui (12), tournée vers une couche de couverture (2, 4), est munie, au moins par tronçons, d'adhésif (8).

10. Procédé selon l'une des revendications précédentes, **caractérisé en ce que** le rebord d'appui (12) présente un matériau fibreux, en particulier un matériau de type carton.
